# FASCICULE DE BREVET EUROPEEN

(11) **EP 0 604 264 B1**
(45) Date de publication et mention de la délivrance du brevet: **07.01.1998**
(21) Numéro de dépôt: 93402975.2
(22) Date de dépôt: 09.12.1993
(51) Int. Cl.: F16L 55/18, F16L 55/165

(54) **Ensemble constitué d'une bride et d'une conduite pour le tubage interne de canalisations**
Anordnung bestehend aus Flansch und Auskleidung zum Sanieren von Rohrleitungen
Assembly comprising a flange and a liner for renovating pipelines

(30) Priorité: 21.12.1992 FR 9215409
(43) Date de publication de la demande: 29.06.1994
(73) Titulaire: GAZ DE FRANCE (SERVICE NATIONAL), F-75017 Paris (FR)
(72) Inventeur: Marcout, Alain, F-69630 Chaponost (FR); Teillaud, Marcel, F-69250 Neuville-Sur-Saone (FR); Berger, Yves, F-69007 Lyon (FR); Berland, Michel, F-69410 Champagne-Au-Mont-d'Or (FR)
(74) Mandataire: Lerner, François

(56) Documents cités:
- EP-A- 0 068 657
- WO-A-90/07672
- DE-A- 3 722 622

## Description

L'invention se rapporte aux éléments de liaison prévus sur des canalisations et autres conduites, par exemple pour la distribution d'eau ou de gaz.

Plus précisément, l'invention vise en particulier à proposer une bride d'étanchéité amovible, réalisée en plusieurs parties, de manière à pouvoir être montée sur un embout de canalisation, puis démontée aisément, dans le cadre tout particulièrement du guidage d'un tube relativement souple, tel qu'un tube en polyéthylène, utilisé pour le tubage interne notamment d'une canalisation métallique existante, lorsqu'elle s'avère défectueuse, ce tubage pouvant s'effectuer "en charge" (c'est-à-dire sans interrompre l'approvisionnement de l'utilisateur).

Bien entendu, il existe déjà, des moyens adaptés pour permettre le tubage interne de canalisations.

Actuellement, lorsque par exemple une rénovation est à effectuer localement le long d'une conduite en fonte, la technique courante consiste à effectuer deux fouilles, en amont et en aval de la zone défectueuse, pour y déterrer localement la conduite. Après mise en place, à l'endroit de ces fouilles, de deux dérivations et de systèmes temporaires d'obturation, la conduite est coupée à l'endroit des deux fouilles. Entre les coupures on définit ainsi la partie à tuber, ceci sans interrompre l'alimentation en gaz des usagers.

Dans la fouille "amont" (dite fouille d'introduction) une bride monobloc équipée d'une vanne ou d'un robinet est montée à l'extrémité amont du tronçon à tuber et, à l'aide d'un introducteur (ou pousse-tube), la conduite souple de substitution (qui bien entendu présente un diamètre inférieur à celui de la canalisation défectueuse) est introduite dans le tronçon coupé. Bien entendu, on a préalablement pris soin de retirer les moyens temporaires d'obturation, là où cela était nécessaire.

Une fois le tronçon tubé, une mousse plastique d'étanchéité est alors habituellement injectée autour de la conduite de tubage, à l'intérieur de l'extrémité du tronçon par où débouche cette conduite. La mousse a pour but de colmater l'espace entre la conduite de tubage et la canalisation tubée. Une fois la mousse prise, l'opérateur vient généralement casser le bout du tronçon de canalisation situé au-delà du bloc de mousse et un nouveau bouchon de mousse est en règle générale introduit dans l'extrémité de la conduite métallique ainsi préparée, la mousse étant alors normalement contenue dans un sac pour former un cône étanche renforçant la protection assurée par le premier bouchon.

Le reste des opérations étant assez classique, on en restera là les concernant. On remarquera toutefois que l'emploi de tels bouchons en mousse s'avère en pratique une opération difficile à maîtriser, ceci notamment pour les raisons suivantes :

Tout d'abord, les conditions d'emploi dépendent de la température ambiante. En particulier, en dessous de 5°C, l'emploi de la mousse est proscrit.

Se posent également des problèmes de fiabilité de l'étanchéité, compte tenu de la maîtrise à acquérir du temps de prise des produits utilisés. Pour que les opérations se déroulent correctement, il faut donc que le personnel soit qualifié et bien formé.

En outre, malgré les précautions prises, il est parfois difficile de contrôler l'expansion de la mousse à l'intérieur de la canalisation, avec le risque inhérent de venir obturer des conduites annexes.

De surcroît, les conditions réelles d'exploitation conduisent parfois à un gaspillage de produit moussant dont il faut en outre contrôler la date de péremption.

Enfin, il s'avère que, dans le temps, les variations de température ont une influence sur la fiabilité de l'étanchéité, la nature différente des conduites de tubage (matière plastique) et des canalisations tubées (métalliques, souvent fonte ou acier) ne venant que renforcer cela.

En résumé, les systèmes existants posent, au-delà des questions de coûts, des problèmes d'utilisation rationnelle et de fiabilité dans le temps.

Dans ces conditions, l'invention a pour objet de proposer un système de raccordement, de guidage et de contrôle permettant en particulier de rationaliser les opérations de tubage, ceci avec une fiabilité et des conditions d'exploitation meilleures que celles existantes.

Plus précisément, l'invention propose notamment un ensemble constitué d'une bride d'étanchéité disposée sur une conduite, caractérisé en ce que la bride comprenant :
- une série d'éléments de bride discoïdaux séparables, traversés chacun par un orifice central et disposés les uns à la suite des autres, coaxialement suivant leur axe d'orifice, ces éléments étant individuellement constitués de plusieurs parties séparables réunies entre elles suivant une surface de jonction essentiellement parallèle à leur dit axe commun d'orifice,
- des premiers joints annulaires interposés successivement entre deux éléments de brides adjacents,
- des seconds joints interposés successivement, par tronçon, entre deux surfaces de jonction de parties de bride, sans déborder de ces surfaces,
- des premiers moyens axiaux amovibles de liaison et de serrage pour la fixation de la bride à un embout équipant une extrémité de canalisation et pour la jonction étanche, entre eux, des différents éléments de bride, et
- des seconds moyens transversaux amovibles de serrage entre eux des différentes parties d'un même élément de bride,
et en ce que le diamètre de l'orifice intérieur des premiers joints d'étanchéité est sensiblement égal ou légèrement inférieur au diamètre externe de la conduite,.

Ainsi conçue, cette bride est d'ailleurs d'autant plus intéressante, au-delà de son caractère "récupérable" une fois son utilisation terminée, qu'elle autorise la fixation amovible, sur elle, du côté opposé à la canalisation qui la porte, soit d'un sas de visualisation du tubage effectif du tronçon ainsi rénové, soit d'une contre-bride réalisée en au moins deux pièces séparables et pouvant donc aisément être montée ou démontée autour de la conduite de tubage pour renforcer l'étanchéité autour d'elle, jusqu'à ce que l'opération de tubage soit définitivement terminée.

Outre à un tel ensemble, l'invention, dans une forme préférée de réalisation, se rapporte à un dispositif de guidage favorisant ces opérations de tubage, le dispositif comprenant l'ensemble précité, le diamètre des éléments de bride étant alors supérieur au diamètre extérieur de la conduite de tubage et le diamètre du dernier élément de bride opposé à la canalisation présentant par contre un diamètre d'orifice sensiblement égal au diamètre extérieur de cette canalisation.

De cette manière, les opérateurs pourront disposer d'une bride dont l'étanchéité sera assurée de manière étagée, renforçant donc encore la sécurité. En outre, dans le cadre de cette application, la canalisation de tubage pourra être efficacement guidée en particulier par l'élément de bride terminal dont le diamètre lui correspondra, le sas transparent raccordable au bout de cet élément de bride terminal venant encore renforcer les conditions de sécurité.

Bien entendu, il est clair qu'un tel ensemble sera en pratique très peu sensible à la température, son amovibilité, une fois les opérations de tubage terminées, permettant par ailleurs de réduire les coûts d'exploitation.

En outre, quel que soit leur degré de formation, les opérateurs ne risqueront pas de venir obturer les conduites de dérivation et autres prises annexes, puisqu'aucun matériau de remplissage ne sera plus utilisé. Les problèmes de gaspillage de produit seront donc tout simplement supprimés.

D'autres caractéristiques et avantages de l'invention relatives notamment au procédé de tubage conseillé apparaîtront encore de la description plus détaillée qui va suivre faite en référence aux dessins annexés qui illustrent un exemple préféré de réalisation de l'invention et dans lesquels :
- les figures 1 à 4 illustrent schématiquement les quatre premières étapes principales de préparation au tubage d'un tronçon de canalisation défectueux ou à rénover,
- la figure 5 montre la mise en place de la bride de l'invention (ici en deux parties) du côté de l'extrémité aval du tronçon isolé de la figure 4 (c'est-à-dire à l'endroit du repère V de cette même figure)
- la figure 6 montre la bride en question en vue de côté,
- la figure 7 est une vue de face de cette même bride dans le sens de la flèche VII de la figure 6,
- la figure 8 montre la mise en place contre cette bride d'une autre bride multi-éléments, suivant une vue schématique en coupe longitudinale médiane,
- la figure 9 montre une vue en perspective d'une moitié de la bride multi-éléments de la figure 8, avec ses joints annulaires d'étanchéité en position,
- la figure 10 montre en vue éclatée et en coupe longitudinale médiane la mise en place du sas d'étanchéité,
- la figure 11 montre, toujours en coupe longitudinale médiane, la partie intérieure formant piston d'étanchéité du sas,
- la figure 12 montre, dans la même vue que les figures 8 et 10, l'installation contre l'élément de bride terminal précité d'une contre-bride remplaçant le sas,
- la figure 13 montre cette contre-bride en vue perspective éclatée,
- et la figure 14 présente à nouveau, à l'image des figures 1 à 4, une vue d'ensemble de la zone de tubage, alors que le tronçon défectueux est déjà tubé.

Dans ce qui suit, et en référence aux dessins, on ne va décrire qu'un exemple de réalisation et d'utilisation préférés des moyens et du procédé de l'invention, dans le cadre du tubage d'une conduite métallique, par exemple en fonte, dans laquelle circule un gaz, tel que du gaz naturel.

Supposons qu'une équipe spécialisée ait défini, à un endroit de cette canalisation, un tronçon la devant être rénové.

De part et d'autre de ce tronçon deux fouilles 5a 5b sont alors creusées de manière à mettre à jour deux portions de canalisation 1b 1c, situées respectivement en amont et en aval du tronçon la (la flèche 7 indiquant le sens de circulation du gaz).

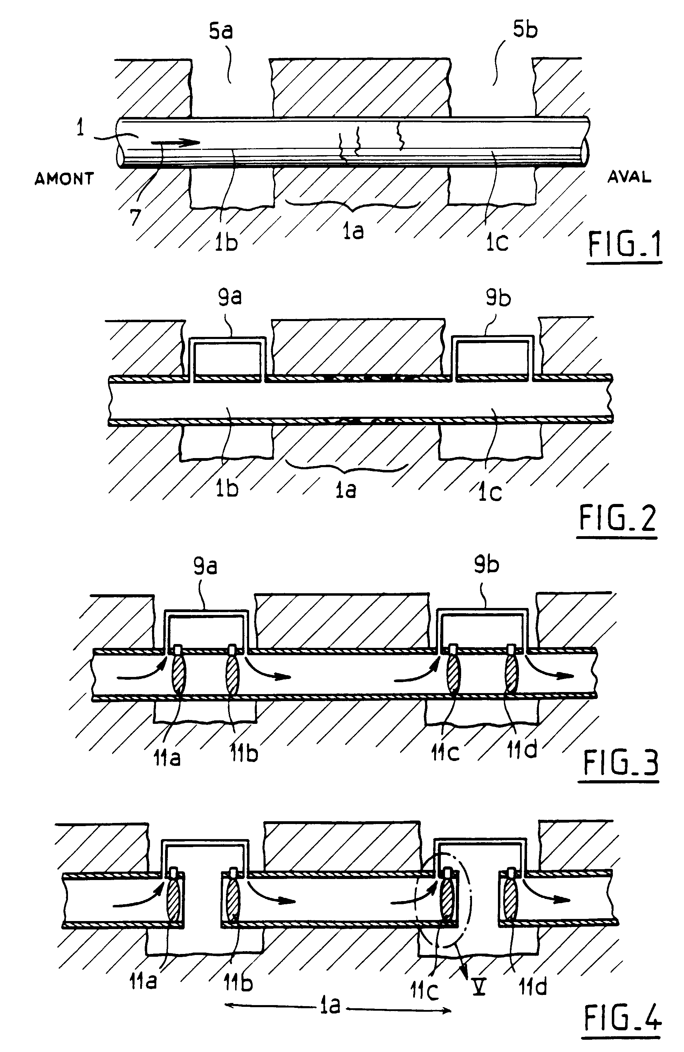

Avec les précautions d'usage habituelles, deux conduites de dérivation de longueur appropriée, 9a 9b, (figure 2) sont alors branchées à l'endroit des deux portions déterrées 1b 1c.

Dès cette opération effectuée, des moyens d'isolement étanche sont mis en place pour forcer la circulation du gaz dans les dérivations.

A cet effet, on peut notamment utiliser de maniére classique quatre ballons gonflables 11a, 11b, 11c, 11d introduits dans la canalisation via quatre perçages transversaux (Figure 3). (Tout ceci est parfaitement connu, le document FR 2 663 104 décrivant par exemple des moyens adaptés à ces opérations).

On va alors pouvoir isoler le tronçon la à rénover en coupant la canalisation à l'endroit des deux fouilles, entre les moyens d'isolement étanches précités (Figure 4).

Ces deux discontinuités réalisées, on va réellement commencer les opérations de tubage.

Au lieu, comme on le faisait jusqu'à présent, d'installer uniquement des brides monobloc indémontables et d'assurer l'étanchéité aux endroits appropriés en recourant à une mousse plastique expansible dont on a noté en début de description les inconvénients, on va maintenant, conformément à l'invention, installer au moins à l'extrémité aval du tronçon la isolé, un embout qui pourra être démonté une fois le tubage terminé.

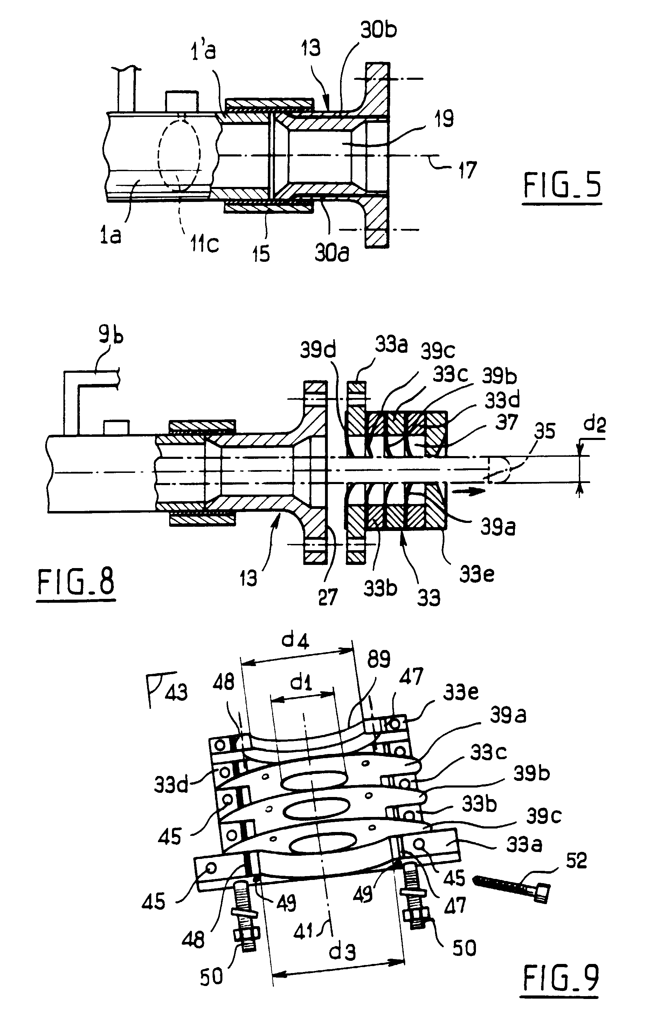

A la figure 5, on a ainsi représenté un embout ou bride 13 démontable, disposé coaxialement au tronçon à rénover 1a, en l'espèce du côté de son extrémité aval 1'a.

Pour la liaison des pièces la et 13, on pourra employer un manchon 15 de jonction étanche des pièces, tel par exemple qu'un manchon trois pièces de type AP3 fabriqué par les sociétés "E.I.E.", "Electroma" ou "Indusha".

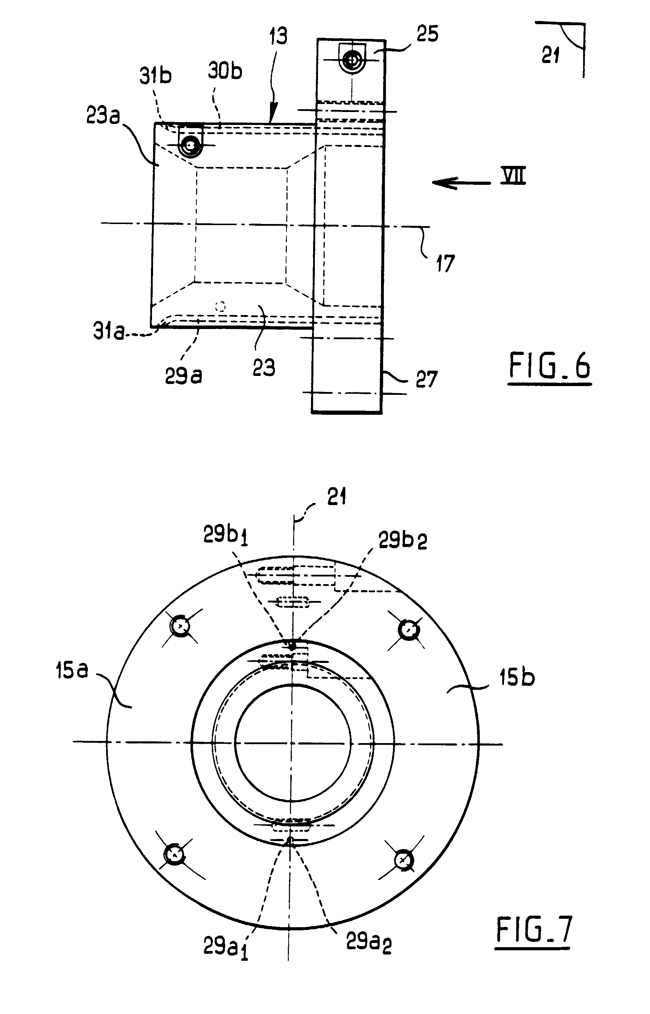

Concernant l'embout 13, on remarquera qu'il est constitué en plusieurs pièces séparables transversalement à son axe 17, de manière à être démontable alors même que la conduite intérieure souple de tubage le traversera. Dans la version illustrée, cet embout est en deux pièces 15a, 15b (figure 7). Dans leur état assemblé, ces pièces définissent l'orifice central axial 19 et sont réunies ensemble suivant une surface de jonction parallèle à (ou contenant) l'axe 17. Dans la réalisation retenue, cette surface de jonction est constituée par le plan médian 21.

Comme illustré plus particulièrement sur la figure 6, l'embout 13 pourra être constitué essentiellement d'un corps 23 cylindrique de section extérieure circulaire présentant un diamètre comparable à celui de la canalisation porteuse, ce corps 23 se prolongeant d'un côté par une partie de diamètre élargi formant collerette 25 à plan de joint 27. De manière classique, des pions de centrage et des vis assurent la liaison entre elles des deux demi-coquilles 15a 15b. Pour éviter tout problème d'étanchéité, deux (demi)-gorges complémentaires 29a1, 29a2 ; 29b1, 29b2 ont été formées à l'endroit des plans de jonction des deux pièces, de manière à pouvoir y recevoir deux joints d'étanchéité 30a, 30b. Sur la figure 6, on remarquera que chacune des gorges précitées est formée de telle manière qu'une fois réunies elles forment deux canaux (tels que 29a) de réception des joints (tels que 30b) s'étendant, sur la plus grande partie de leur longueur, paralèllement à l'axe 17, sauf à proximité de l'extrémité libre 23a du corps 23 où les gorges présentent un coude 31a, 31b qui les dirige vers la surface latérale extérieure dudit corps. En d'autres termes, les gorges ne débouchent pas sur la paroi d'extrémité 23a, évitant ainsi tout risque de fuite de gaz dans les gorges, le long des joints.

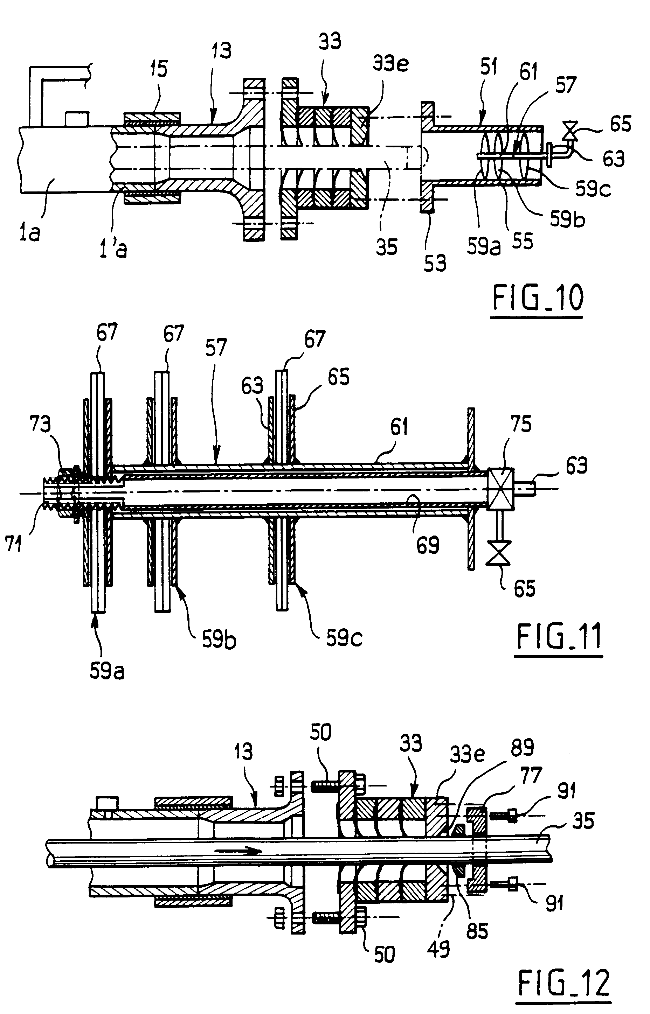

Dans la pratique, l'embout 13 ainsi constitué sera en particulier utilisé pour la fixation amovible de la bride séparable multi-éléments 33 de l'invention, illustrée notamment sur les figures 8 et 9.

Dans la version illustrée, cette bride 33 se présente comme une série d'éléments de bride 33a, 33b, 33c, 33d, 33e, constituant une série de couronnes, comme si la bride avait été coupée en rondelles, avec un disque primaire 33a de plus fort diamètre extérieur, puis quatre disques de diamètres extérieurs sensiblement équivalents entre eux mais inférieurs à celui du premier disque 33a, lequel est prévu pour venir axialement au contact de la surface de jonction 27 de l'embout 13.

Etant donné que la bride 33 est tout particulièrement prévue pour assurer longitudinalement le guidage en étanchéité d'une conduite souple de tubage (par exemple en polyéthylène) schématisée en traits fantômes en 35 sur la figure 8, elle sera donc traversée dans son état assemblé, par un passage axial repéré 37, dans son ensemble. En outre, pour l'étanchéité, une série de disques (en l'espèce quatre 39a, 39b, 39c, 39d) seront interposés entre deux éléments de brides adjacents (sauf pour les deux derniers 33d, 33e), ainsi qu'entre le premier élément de bride 33a et l'embout de raccordement 13. Très avantageusement, le diamètre intérieur commun d1 de l'orifice central de ces disques d'étanchéité sera égal, voire même légèrement inférieur, au diamètre extérieur d2 de la conduite 35 de tubage. Par contre, le diamètre intérieur d3 des éléments de bride 33a, 33d sera de préférence assez nettement supérieur au diamètre d2, la canalisation étant en fait essentiellement guidée dans son mouvement de translation axiale par l'orifice central de chaque disque d'étanchéité ainsi que par l'orifice central de l'élément de bride terminal 33e dont le diamètre intérieur d4 sera avantageusement sensiblement égal au diamètre d2. On comprend qu'ainsi, au cours du tubage, les disques d'étanchéité précités, qui seront réalisés en une matière souple, se déformeront élastiquement pour constituer une sorte de cône central autour de la conduite, favorisant encore l'étanchéité autour d'elle.

Outre le fait d'être ainsi constituée en une série de rondelles, la bride 33 est telle que chaque rondelle est formée de deux parties séparables propres à être réunies suivant un plan de joint médian 43 confondu avec l'axe central 41 de bride (figure 9). Ainsi, chaque élément de bride pourra être constitué de deux parties identiques hémi-cylindriques, des perçages transversaux, dont quelques uns ont été repérés 45 sur la figure 9, permettant la mise en place de vis de serrage entre elles des deux-demi parties de chaque élément. Il doit être clair que pour des raisons d'efficacité les disques d'étanchéité( 39a,...) seront par contre réalisés en une seule pièce.

Pour régler le problème de l'étanchéité de la jonction entre elles des parties de chaque élément de bride, la solution retenue a été, comme pour l'embout 13, de réaliser dans la surface de plan de joint de chaque demi-élément, des gorges, telles que repérées pour certaines 47 sur la figure 9, s'étendant parallèlement à l'axe 41, les unes à la suite des autres, de telle sorte qu'une fois la bride entièrement montée, l'étanchéité dans le plan de jonction soit assurée par des tronçons de joint, ou bâtonnets 48 logés dans les gorges 47, chaque tronçon de joint étant séparé du tronçon de l'élément adjacent par les disques 39a, 39b....

Sur la figure 9, on remarquera encore qu'on a repéré en 49 certaines des vis prévues pour traverser et réunir entre eux axialement les différents éléments de bride à travers les joints 39a,..., l'une des vis de serrage, via les perçages 45, des deux demi-brides ainsi obtenues ayant en outre été repérée 52. Sur les figures 9 et 12 on repérera également en 50 deux des vis de serrage de la bride contre l'embout 13.

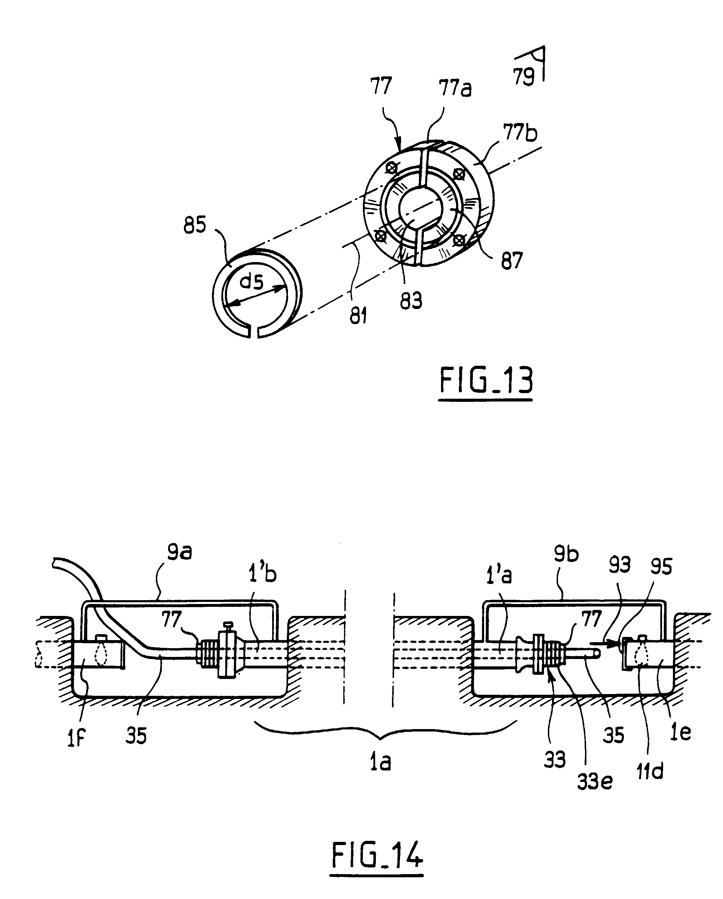

A l'image de l'illustration de la figure 14,la bride multi-éléments démontable 33 sera installée en regard au moins de l'extrémité aval 1'a du tronçon de canalisation à rénover.

Une fois cette bride installée, on pourra venir, lui adjoindre, dans un premier temps et dans le prolongement de son élément de bride terminal 33e côté aval, un sas de préférence transparent repéré 51 sur la figure 10. Ce sas aura essentiellement pour rôle de prévenir l'opérateur que la canalisation intérieure de tubage a traversé correctement le tronçon de canalisation la de la bride aval 33.

Le sas 51 pourra comprendre une collerette de fixation 53 prolongée axialement par une partie en forme de tube cylindrique transparent, de section circulaire, 55. De préférence, le sas sera ouvert à ses deux extrémités axiales opposées. A travers l'extrémité libre opposée à la collerette 53, un organe d'étanchéité 57 sera introduit à l'intérieur du sas. Ce bouchon 57 pourra présenter, à la manière d'un piston, trois disques successifs de guidage et d'étanchéité, 59a, 59b, 59c, montés sur une tubulure centrale 61 pouvant être raccordée extérieurement à une prise de branchement 63 et à un manomètre 65, permettant ainsi de contrôler l'atmosphère et la pression régnant à l'intérieur du sas, en particulier lorsque la canalisation de tubage 35 y débouchera (voir figure 10).

Sur la figure 11, on a figuré en vue agrandie un mode possible de réalisation du bouchon 57. Ainsi, on remarquera que les trois pièces radiales 59a, 59b, 59c pourront être constituées chacune par deux flasques radiaux 63, 65, bloqués longitudinalement en trois endroits différents le long de la tubulure axiale de maintien 61, chaque paire de flasques enserrant un tampon radial d'étanchéité 67 d'un diamètre extérieur de préférence légèrement supérieur au diamètre intérieur du sas. Intérieurement, la tubulure 61 pourra en outre être traversée par un tube 69 et être terminée d'un côté par un pas de vis 71, un écrou 73 assurant le serrage de la première paire de flasques contre le bout de la tubulure. Du côté opposé, le tube 69 sera raccordé au capteur 65 et au raccord 63, via la vanne 75.

Une fois que l'opérateur aura, à travers le sas, repéré la conduite de tubage 35 et vérifié qu'aucune fuite n'a été décelée par le capteur 65, il pourra alors retirer le sas et monter à sa place, contre l'élément de bride terminal 33e, une contre-bride repérée 77 sur la figure 12.

A l'image des autres pièces 13 et 33, la contre-bride 77 sera avantageusement réalisée en deux demi-parties 77a 77b (figure 13) réunies via des pions de centrage, suivant un plan de joint 79 médian, perpendiculaire à l'axe 81 de l'orifice central 83.

De façon qu'une fois en position contre l'élément de bride 33e, la contre-bride 77 joue pleinement son rôle, le diamètre de son orifice central 83 sera choisi pour être sensiblement égal au diamètre extérieur d2 de la canalisation de tubage 35, de même pour le diamètre intérieur d5 de l'anneau fendu d'étanchéité 85 prévu pour venir se positionner dans le dégagement annulaire 87 de la contre-bride. En pratique, le jonc fendu 85 présentera toutefois une épaisseur supérieure à la profondeur du dégagement 87 et pourra consister en particulier en un joint caoutchouc type "express" adapté pour pénétrer dans un chanfrein 89 ménagé dans la face extérieure frontale de l'élément 33e (voir figure 12). Bien entendu, des moyens de serrage tels que 91 permettront de venir comprimer le joint 85 entre la gorge 89 et la contre-bride 77.

La figure 14 montre la zone d'intervention à ce moment, alors que l'extrémité aval de la canalisation souple dépasse déjà largement de la contre-bride 77 bride. Il ne reste plus alors qu'à retirer la plaque isolante de fermeture 95 qui obturait jusqu'alors l'entrée du tronçon le puis, à raccorder la canalisation à ce tronçon et à dégonfler le ballon d'étanchéité lld.

Ces dernières étapes de mise en place des deux extrémités opposées du tube 35, respectivement dans les parties de canalisation intactes aval 1e et amont 1f, n'étant pas du domaine de l'invention, elles ne seront pas décrites plus avant, étant simplement noté qu'en fin d'opération, la mise en place étanche du tube 35 sera telle que le gaz provenant de la canalisation 1f circulera à l'intérieur du tube, jusqu'à la canalisation 1e, les dérivations 9a, 9b ne jouant plus alors aucun rôle et pouvant en conséquence être retirées, de même que les ballons d'étanchéité encore en place.

A ce moment, et avant de reboucher les fouilles, l'opérateur récupérera les brides 33 en les séparant en leurs divers éléments, seuls les disques annulaires d'étanchéité axiale 39a, 39b.... demeurant autour de la canalisation 35. L'opérateur pourra également récupérer de la même manière les embouts 13, ainsi que les manchons de jonction 15.

## Revendications

1. Ensemble constitué d'une bride d'étanchéité disposée autour d'une conduite, caractérisé en ce que la bride comprend :
- une série d'éléments séparables (33a 33b,..., 33e) discoïdaux traversés chacun par un orifice central (37) et disposés les uns à la suite des autres coaxialement, suivant l'axe (41) de leur dit orifice central, ces éléments de bride étant individuellement eux-mêmes constitués de plusieurs parties séparables réunies entre elles suivant une surface de jonction (43) essentiellement parallèle à leur dit axe commun d'orifice,
- des premiers joints annulaires d'étanchéité (39a, 39b,..., 39e) interposés successivement entre deux éléments discoïdaux adjacents,
- des seconds joints d'étanchéité (48) interposés successivement, par tronçon, entre deux surfaces de jonction de parties de brides, sans déborder de ces surfaces,
- des premiers moyens axiaux amovibles de liaison étanche et de serrage (49,50) pour la fixation de la bride à un embout (13) équipant une extrémité de canalisation (1a) et pour la jonction entre eux des différents éléments de bride, et
- des seconds moyens transversaux amovibles (52) de serrage entre elles des différentes parties d'un même élément de bride (33a,.....,33e),
et en ce que le diamètre (d1) de l'orifice des premiers joints d'étanchéité est sensiblement égal ou légèrement inférieur au diamètre externe (d2) de la conduite (35).

2. Ensemble selon la revendication 1, caractérisé en ce que, parmi ladite série d'éléments (33a,...,33e), on trouve, à une extrémité, un élément de bride terminal (33e) dont le diamètre (d4) de l'orifice central est inférieur à celui des orifices des autres éléments de bride, mais est sensiblement égal ou légèrement supérieur, à celui (d1) de l'orifice central desdits joints annulaires (39a,...,39d) interposés entre deux dits éléments de bride successifs.

3. Ensemble selon la revendication 2, caractérisé en ce que la bride comprend en outre :
- en tant qu'élément supplémentaire de bride séparable des autres, une contre-bride (77) traversée par un orifice central (83) de diamètre sensiblement identique à celui de l'élément de bride terminal (33e), cette contre-bride étant réalisée en plusieurs parties (77a, 77b) séparables, réunies entre elles suivant une surface de jonction sensiblement parallèle à son axe d'orifice (81),
- un jonc (85) d'étanchéité, fendu, interposé entre l'élément de bride terminal (33e) et ladite contre-bride (77), et
- des moyens amovibles (91) de serrage axial de la contre-bride contre l'élément de bride terminal.

4. Ensemble selon la revendication 3, caractérisé en ce que l'élément de bride terminal (33e) présente, en regard de la contre-bride (77), un chanfrein annulaire (89) dans lequel pénètre ledit jonc d'étanchéité (85) sous la pression de serrage de la contre-bride.

5. Dispositif pour le guidage étanche d'un tube (35) de section extérieure sensiblement circulaire relativement souple utilisé pour le tubage interne d'une canalisation (1,1a) à rénover de diamètre intérieur plus important, caractérisé ce qu'il comprend un ensemble constitué d'une bride disposée autour d'une conduite selon l'une quelconque des revendications précédentes, le diamètre intérieur (d3) desdits éléments de bride (33a,....,33e) de la revendication 1 étant supérieur au diamètre extérieur (d2) dudit tube (35) et le diamètre du dernier élément de bride (33e) opposé à la canalisation (1a), à l'embout (13) de laquelle ladite bride (33) est fixée, présentant un diamètre (d4) d'orifice sensiblement égal audit diamètre extérieur (d2) du tube (35).

6. Dispositif selon la revendication 5 caractérisé en ce que ledit embout (13) de canalisation auquel est fixé de façon amovible ladite bride multi-éléments (33) consiste lui-même en une bride de liaison avec un orifice central (19) la traversant, cette bride de liaison comportant au moins deux parties séparables (15a, 15b) réunies entre elles suivant une surface de jonction (21) sensiblement parallèle à l'axe d'orifice (17) de la bride, avec interposition entre ces parties de joints d'étanchéité s'étendant essentiellement parallèlement à l'axe (17) de la bride, sauf vers l'extrémité (23a) de cette bride située du côté de la canalisation où lesdits joints divergent vers l'extérieur.

7. Dispositif pour le guidage étanche d'un tube (35) relativement souple utilisé pour le tubage interne d'une canalisation (1, la) à rénover dont la section intérieure est plus importante que la section extérieure dudit tube, caractérisé en ce qu'il comprend un ensemble constitué d'une bride (33) disposée autour de la conduite (35) selon la revendication 2, ainsi qu'un sas transparent (51) creux obturé d'un côté par un bouchon (57) et présentant une section intérieure au moins égale à celle (d4) de l'orifice de l'élément (33e) de bride terminal auquel ledit sas est fixé de manière amovible

8. Dispositif de la revendication 7 caractérisée en ce que le bouchon (57) de fermeture du sas comprend au moins un disque (59a,59b,59c) intégrant des moyens d'étanchéité (67) et disposé dans le sas perpendiculairement à son axe, ledit disque étant traversé par un tube (61 69) débouchant à l'extérieur du sas, ce tube étant équipé d'un robinet (75) et d'un embout de raccordement à un manomètre (65).

## Patentansprüche

1. Aufbau, bestehend aus einem Dichtigkeitsflansch, der rund um eine Leitung angeordnet ist, dadurch gekennzeichnet, daß der Flansch aufweist:
- eine Reihe von trennbaren, diskusförmigen Elementen (33a, 33b 33e), von denen jedes von einer zentrale Öffnung (37) durchquert ist und die nacheinander koaxial gemäß der Achse (41) ihrer gemeinsamen zentralen Öffnung angeordnet sind, wobei die Flanschelemente selbst einzeln aus mehreren trennbaren Teilen bestehen, die untereinander gemäß einer Verbindungsoberfläche (43) im wesentlichen parallel zu ihrer gemeinsamen Öffnungsachse vereinigt sind,
- erste ringförmige Dichtungsverbindungen (39a, 39b,...., 39e), die aufeinanderfolgend zwischen zwei angrenzenden diskusförmigen Elementen angeordnet sind,
- zweite Dichtungsverbindungen (48), die aufeinanderfolgend durch ein Endstück zwischen zwei Verbindungsoberflächen der Flanschteile angeordnet sind, ohne aus diesen Oberflächen hervorzuragen,
- erste axiale, lösbare Mittel für dichte Verbindung und Klemmung (49, 50) für die Befestigung des Flansches an einem Ansatzstück (13), welches ein Ende der Rohrleitung (1a) bildet, und für die Verbindung der verschiedenen Flanschelemente untereinander, und
- zweite quer laufende, lösbare Mittel (52) für die Klemmung der verschiedenen Teile eines selben Flanschelementes (33a....,33e) untereinander,
und dadurch, daß der Öffnungsdurchmesser (d1) der ersten Dichtungsverbindungen im wesentlichen gleich oder leicht geringer als der Außendurchmesser (d2) der Leitung (35) ist.

2. Aufbau nach Anspruch 1, dadurch gekennzeichnet, daß sich unter der Reihe der Elemente (33a 33e) an einem Ende ein Endflanschelement (33e) befindet, dessen zentraler Öffnungsdurchmesser (d4) geringer ist als der der Öffnungen der anderen Flanschelemente, aber im wesentlichen gleich oder leicht höher als der (d1) der zentralen Öffnung der ringförmigen Verbindungen (39a..., 39d), die zwischen zwei aufeinanderfolgenden Flanschelementen angeordnet sind.

3. Aufbau nach Anspruch 2, dadurch gekennzeichnet, daß der Flansch ferner aufweist:
- als zusätzliches von den anderen trennbares Flanschelement einen Gegenflansch (77), der von einer zentralen Öffnung (83) mit im wesentlichen dem des Endflanschelementes (33e) identischen Durchmesser durchquert wird, wobei dieser Gegenflansch aus mehreren trennbaren Teilen (77a, 77b) ausgeführt ist, die untereinander gemäß einer Verbindungsoberfläche im wesentlichen parallel zu ihrer Öffnungsachse (81) vereinigt sind,
- einen geschlitzten Dichtungsring (85), der zwischen dem Endflanschelement (33e) und dem Gegenflansch (77) angeordnet ist, und
- lösbare Mittel (91) für die axiale Klemmung des Gegenflansches gegen das Endflanschelement.

4. Aufbau nach Anspruch 3, dadurch gekennzeichnet, daß das Endflanschelement (33e) gegenüber dem Gegenflansch (77) eine ringförmige Abfasung (89) aufweist, in welche der Dichtungsring (85) unter dem Klemmdruck des Gegenflansches eindringt.

5. Vorrichtung für die dichte Führung eines verhältnismäßig weichen Rohres (35) mit im wesentlichen kreisrundem äußerem Querschnitt, das für die innere Verrohrung einer zu sanierenden Rohrleitung (1, 1a) von größerem innerem Durchmesser verwendet wird, dadurch gekennzeichnet, daß sie einen Aufbau aufweist, der aus einem Flansch besteht, welcher rund um eine Leitung angeordnet ist, nach einem der vorhergehenden Ansprüche, wobei der innere Durchmesser (d3) der Flanschelemente (33a..., 33e) des Anspruches 1 größer ist als der äußere Durchmesser (d2) des Rohres (35) und der Durchmesser des letzten, der Rohrleitung (1a) gegenüberliegenden Flanschelementes (33e), an deren Ansatzstück (13) der Flansch (33) befestigt ist, einen Öffnungsdurchmesser (d4) aufweist, der im wesentlichen gleich dem äußeren Durchmesser (d2) des Rohres (35) ist.

6. Vorrichtung nach Anspruch 5, dadurch gekennzeichnet, daß das Ansatzstück (13) der Rohrleitung, mit welchem der Mehrfachelementenflansch (33) lösbar befestigt ist, selbst aus einem Verbindungsflansch mit einer ihn quer durchlaufenden zentralen Öffnung (19) besteht, wobei der Verbindungsflansch mindestens zwei trennbare Teile (15a, 15b) aufweist, die untereinander gemäß einer Verbindungsoberfläche (21) im wesentlichen parallel zu der Öffnungsachse (17) des Flansches vereinigt sind, wobei sie sich unter Anordnen zwischen diesen Dichtungsverbindungsteilen im wesentlichen parallel zu der Flanschachse (17) erstrecken, außer zu dem Ende (23a) dieses Flansches hin, welches sich auf der Seite der Rohrleitung befindet, wo diese Verbindungen nach außen divergieren.

7. Vorrichtung für die dichte Führung eines verhältnismäßig weichen Rohres (35), das für die innere Verrohrung einer zu sanierenden Rohrleitung (1, 1a) verwendet wird, deren innerer Querschnitt größer ist als der äußere Querschnitt des Rohres, dadurch gekennzeichnet, daß sie einen Aufbau aufweist, der aus einem Flansch (33) besteht, der rund um die Leitung (35) nach Anspruch 2 angeordnet ist, sowie eine transparente, hohle Schleusenkammer (51), die auf einer Seite durch einen Stopfen (57) verschlossen ist und einen inneren Querschnitt aufweist, der mindestens gleich dem (d4) der Öffnung des Endflanschelementes (33e) ist, an welchem diese Schleusenkammer lösbar befestigt ist.

8. Vorrichtung nach Anspruch 7, dadurch gekennzeichnet, daß der Verschlußstopfen (57) der Schleusenkammer mindestens eine Scheibe (59a, 59b, 59c) aufweist, welche Dichtungsmittel (67) aufweist und in der Schleusenkammer senkrecht zu ihrer Achse angeordnet ist, wobei die Scheibe von einem Rohr (61, 69) durchquert wird, welches außerhalb der Schleusenkammer mündet, wobei das Rohr mit einem Hahn (75) und einem Ansatzstück für den Anschluß an ein Manometer (65) ausgestattet ist.

## Claims

1. Assembly consisting of a sealing flange arranged round a pipe, characterized in that the flange comprises:
- a series of separable disk-shaped elements (33a, 33b,..., 33e) each traversed by a central opening (37) and arranged one after the other coaxially along the axis (41) of their said central opening, the flange elements themselves consisting individually of a plurality of separable parts joined to one another at a junction surface (43) essentially parallel to their said common axis of opening,
- first annular sealing gaskets (39a, 39b,..., 39e) interposed in succession between two adjacent disk-shaped elements,
- second sealing gaskets (48) interposed in succession, by section, between two junction surfaces of flange portions, without projecting beyond these surfaces,
- first, axial, detachable means (49, 50) for sealed connection and clamping for fixing the flange to an end-piece (13) with which one end of the pipeline (la) is equipped and for joining the different flange elements to one another, and
- second, transverse, detachable means (52) for clamping the different portions of the same flange element (33a, ...., 33e) to one another,
and in that the diameter (d1) of the opening of the first sealing gaskets is substantially equal to or slightly smaller than the outside diameter (d2) of the pipe (35).

2. Assembly according to Claim 1, characterized in that among said series of elements (33a,...,33e) there is to be found, at one end, a terminal flange element (33e) the diameter (d4) of the central opening of which is smaller than that of the openings of the other flange elements, but is substantially equal to or slightly larger than that (d1) of the central opening of the said annular gaskets (39a,...,39d) interposed between two successive said flange elements.

3. Assembly according to Claim 2, characterized in that the flange additionally comprises:
- as an additional flange element separable from the others, a counter flange (77) traversed by a central opening (83) having a diameter substantially identical to that of the terminal flange element (33e), the counter flange being produced in a plurality of separable parts (77a, 77b) joined to one another at a junction surface substantially parallel to its opening axis (81),
- a split sealing ring (85), interposed between the terminal flange element (33e) and the said counter flange (77), and
- detachable means (91) for axial clamping of the counter flange against the terminal flange element.

4. Assembly according to Claim 3, characterized in that the terminal flange element (33e) has, opposite the counter flange (77), an annular chamfer (89) into which the said sealing ring (85) penetrates under the clamping pressure of the counter flange.

5. Device for the sealed guiding of a relatively flexible tube (35) of substantially circular outer section used for the internal lining of a pipeline (1, la) to be renovated, having a larger inside diameter, characterized in that it comprises an assembly consisting of a flange arranged round a pipe according to any one of the preceding claims, the inside diameter (d3) of the said flange elements (33a,....,33e) of Claim 1 being larger than the outside diameter (d2) of the said tube (35) and the diameter of the last flange element (33e) opposite the pipeline (1a), to the end-piece (13) of which the said flange (33) is fixed, having an opening diameter (d4) substantially equal to the said outside diameter (d2) of the tube (35).

6. Device according to Claim 5, characterized in that the said pipeline end-piece (13), to which the said multi-element flange (33) is detachably fixed, itself consists of a connecting flange with a central opening (19) passing through it, this connecting flange comprising at least two separable portions (15a, 15b) joined to one another at a junction surface (21) substantially parallel to the axis (17) of opening of the flange, with the interposition, between these portions, of sealing gaskets extending substantially parallel to the axis (17) of the flange, except towards the end (23a) of the flange located on the pipeline side where the said gaskets diverge towards the outside.

7. Device for the sealed guiding of a relatively flexible tube (35) used for the internal lining of a pipeline (1, 1a) to be renovated, the internal section of which is larger than the external section of the said tube, characterized in that it comprises an assembly consisting of a flange (33) arranged round the pipe (35) according to Claim 2, and also a hollow transparent chamber (51) blocked on one side by a plug (57) and having an internal section at least equal to that (d4) of the opening of the terminal flange element (33e) to which the said chamber is detachably fixed.

8. Device of Claim 7, characterized in that the plug (57) for closing the chamber comprises at least one disk (59a, 59b, 59c) incorporating sealing means (67) and arranged in the chamber perpendicularly to its axis, the said disk being traversed by a tube (61, 69) opening to the outside of the chamber, the tube being equipped with a tap (75) and with an end-piece for connection to a pressure gauge (65).
